# FASCICULE DE BREVET EUROPEEN

(11) **EP 2 675 330 B1**
(45) Date de publication et mention de la délivrance du brevet: **11.03.2015**
(21) Numéro de dépôt: 12703540.0
(22) Date de dépôt: 10.02.2012
(51) Int. Cl.: A47J 43/07

(54) **FOUET POUR APPAREIL ÉLECTROMÉNAGER DE PRÉPARATION CULINAIRE**
QUIRL FÜR EIN ELEKTRISCHES HAUSHALTSGERÄT ZUR NAHRUNGSZUBEREITUNG
WHISK FOR AN ELECTRIC HOUSEHOLD APPLIANCE FOR PREPARING FOOD

(30) Priorité: 18.02.2011 FR 1151372
(43) Date de publication de la demande: 25.12.2013
(73) Titulaire: SEB S.A., 69130 Ecully (FR)
(72) Inventeur: LEGEAY, Dominique, F-53300 Cigne (FR); GRASSIN, Stéphane, F-53100 Moulay (FR); FOLLEZOUR, Anne-Estelle, F-53100 Chatillon-sur-Colmont (FR); GARRIGUES, Patrick, F-65260 Pierrefitte-Nestalas (FR); TOMPA, Carole, F-65000 Tarbes (FR)
(74) Mandataire: Bourrières, Patrice
(86) Numéro de dépôt international: PCT/EP2012/052347
(87) Numéro de publication internationale: WO 2012/110427

(56) Documents cités:
- DE-C- 318 289
- FR-A1- 2 768 607
- GB-A- 2 432 543
- US-A- 1 847 563
- US-A1- 2005 164 801
- US-A1- 2008 043 569
- US-B1- 6 206 561

## Description

La présente invention se rapporte au domaine technique général des fouets pour appareils électroménagers de préparation culinaire et se rapporte plus particulièrement à un fouet comportant une tête d'entraînement et des fils en forme de boucle dont les extrémités sont attachées à la tête d'entraînement, les fils définissant une cage, sensiblement rigide, destinée à être plongée dans un récipient de travail.

Il est connu, du brevet GB 11 51 589, un fouet pour appareil électroménager de préparation culinaire comprenant une tête d'entraînement supportant des fils en forme de boucle définissant une cage rigide destinée à être plongée dans un récipient de travail. Un tel fouet muni d'une cage rigide présente l'avantage d'être suffisamment résistant pour permettre le travail des préparations visqueuses, par exemple pour faire des blancs en neige à partir d'oeufs. Cependant, pour qu'un tel fouet soit efficace lors du traitement de faibles quantités d'ingrédients, il est nécessaire que l'extrémité inférieure de la cage parvienne à proximité immédiate du fond du récipient de travail, sans toutefois toucher ce dernier pour ne pas détériorer la paroi du récipient de travail et risquer d'introduire dans la préparation des résidus métalliques générés par l'usure du fouet et/ou du récipient de travail. Ainsi, il est prévu sur cet outil un dispositif de réglage en hauteur du fouet de manière à ce que l'utilisateur puisse régler au mieux la position du fouet par rapport au fond du récipient. Toutefois, une telle opération est relativement fastidieuse et est rarement effectuée par l'utilisateur.

Il est connu, de la demande de brevet FR 2 768 607 déposée par la demanderesse, de remédier à cet inconvénient en proposant un fouet à fils flexibles définissant une cage susceptible de se déformer contre la paroi du récipient de travail. Ainsi, l'utilisateur n'a pas besoin de se soucier de la position précise du fouet par rapport aux parois du récipient de travail puisque, par défaut, il peut être prévu que le fouet vienne au contact du récipient.

Cependant, un tel fouet présente l'inconvénient de posséder une grande souplesse qui le rend moins efficace pour traiter les préparations visqueuses, notamment lorsque ces dernières sont en grande quantité.

Aussi, un but de la présente invention est de remédier à ces inconvénients en proposant un fouet pour appareil électroménager de préparation culinaire qui procure un grand confort et une grande sécurité d'utilisation en ne nécessitant pas de réglage précis de sa position par rapport au récipient de travail, et qui soit à la fois efficace pour traiter des ingrédients introduits en faible quantité dans le récipient de travail et pour traiter des ingrédients introduits en plus grande quantité, notamment lors de la réalisation de préparations visqueuses.

A cet effet, l'invention se rapporte à un fouet pour appareil électroménager de préparation culinaire comportant une tête d'entraînement et des fils en forme de boucle dont les extrémités sont attachées à la tête d'entraînement, les fils définissant une cage centrale destinée à être plongée dans un récipient de travail sans venir au contact de ce dernier, caractérisé en ce que le fouet comporte également des brins définissant une cage externe déformable présentant une moins grande rigidité que la cage centrale, la cage externe comportant une partie inférieure souple qui déborde longitudinalement par rapport à l'extrémité inférieure de la cage centrale, la partie inférieure souple étant destinée à venir au contact d'une paroi du récipient de travail.

Selon une autre caractéristique de l'invention, les brins de la cage externe présentent une plus grande longueur que les fils de la cage centrale.

Selon une autre caractéristique de l'invention, les brins sont en forme de boucle et leurs extrémités sont attachées à la tête d'entraînement.

Selon encore une autre caractéristique de l'invention, les cages centrale et externe sont symétriques par rapport à un axe longitudinal du fouet, la cage centrale étant contenue dans l'enveloppe parcourue par les brins de la cage externe lors de la rotation du fouet autour de son axe longitudinal.

Selon une autre caractéristique de l'invention, les brins de la cage externe comprennent une partie supérieure présentant une plus grande rigidité que la partie inférieure souple.

Selon une autre caractéristique de l'invention, la partie supérieure des brins de la cage externe est réalisée en matériau métallique, par exemple en fil d'inox.

Selon une autre caractéristique de l'invention, la partie inférieure souple est montée de manière amovible sur la partie supérieure de la cage externe.

Selon une autre caractéristique de l'invention, la partie supérieure de la cage externe comporte une extrémité qui est emmanchée dans la partie inférieure souple.

Selon une autre caractéristique de l'invention, la partie supérieure de la cage externe venant s'emmancher dans la partie inférieure souple est munie d'encoches de retenue.

Selon une autre caractéristique de l'invention, les brins de la cage externe sont reliés entre eux par un élément de liaison disposé au niveau de l'extrémité inférieure de la cage externe.

Selon une autre caractéristique de l'invention, la partie inférieure souple est réalisée, au moins partiellement, dans un matériau plastique, tel qu'un matériau polymère de type polyamide, polypropylène ou un élastomère.

Selon une autre caractéristique de l'invention, les fils de la cage centrale sont métalliques.

Selon une autre caractéristique de l'invention, les fils de la cage centrale sont en acier inoxydable.

L'invention concerne également un appareil électroménager de préparation culinaire du genre robot ménager ou batteur comportant un moteur entraînant, par l'intermédiaire d'un organe de transmission, au moins un fouet tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager de préparation culinaire équipé d'un fouet selon un mode particulier de réalisation de l'invention, l'appareil étant représenté avec une cuve et le fouet désaccouplés de l'appareil et avec le bras en position relevée ;
- la figure 2 est une vue en perspective du fouet illustré sur la figure 1 ;
- la figure 3 est une vue de dessous du fouet de la figure 2 ;
- la figure 4 est une vue en perspective éclatée du fouet de la figure 2 ;
- la figure 5 est une vue en coupe partielle, de côté, de l'appareil de la figure 1 en position de fonctionnement.

Seuls les éléments nécessaires à la compréhension de l'invention ont été représentés. Pour faciliter la lecture des dessins, les mêmes éléments portent les mêmes références d'une figure à l'autre.

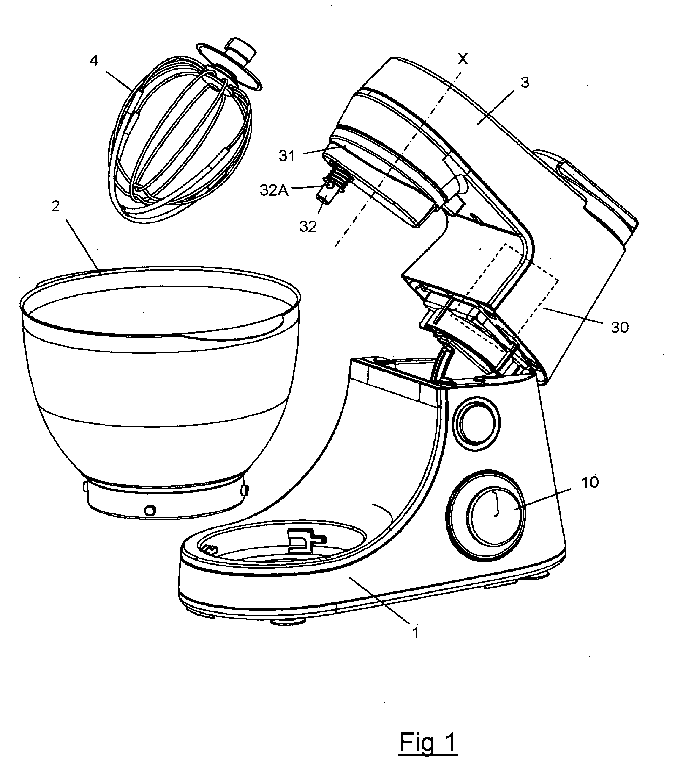

La figure 1 représente un appareil électroménager de préparation culinaire comprenant un socle 1 destiné à supporter une cuve 2 amovible et comportant un bras 3 articulé solidaire du socle 1, le bras 3 renfermant un moteur 30 électrique, illustré en pointillés sur la figure 1, dont la mise en marche et la vitesse sont contrôlées par un bouton de commande 10 disposé sur une face latérale du socle 1.

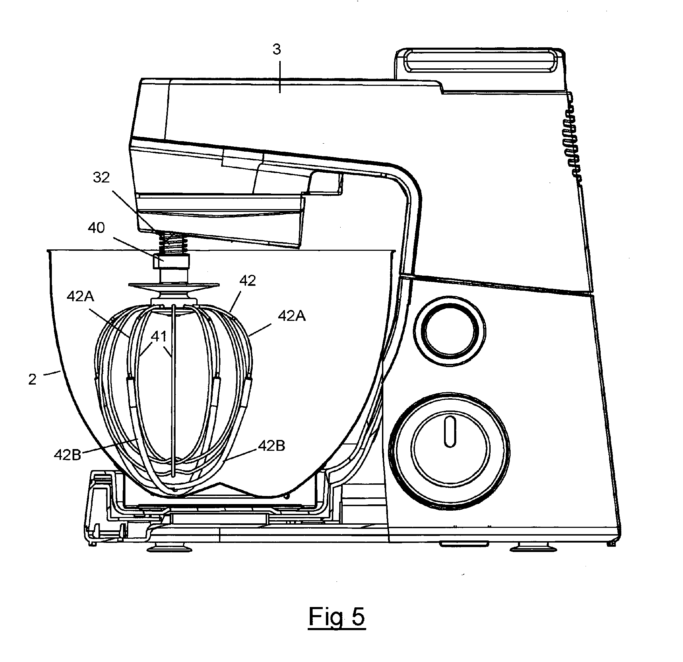

Le bras 3 est mobile en rotation selon un axe sensiblement horizontal entre une position relevée, telle qu'illustrée figure 1, dans laquelle la cuve 2 peut être facilement retirée du socle 1, et une position de travail, illustrée sur la figure 5, dans laquelle le bras 3 s'étend horizontalement au dessus du socle 1.

Le bras 3 comporte, de manière connue en soi, une platine 31 inférieure comprenant des moyens pour l'entraînement d'un fouet 4 selon un mouvement planétaire, la platine 31 étant mobile en rotation autour d'un axe central X et comportant un entraîneur 32 assurant l'entraînement en rotation du fouet 4 sur lui-même, cet ensemble rotatif étant relié au moteur 30 par l'intermédiaire d'une chaîne cinématique mettant notamment en oeuvre un train d'engrenage épicycloïdal selon une conception très largement connue de l'homme du métier.

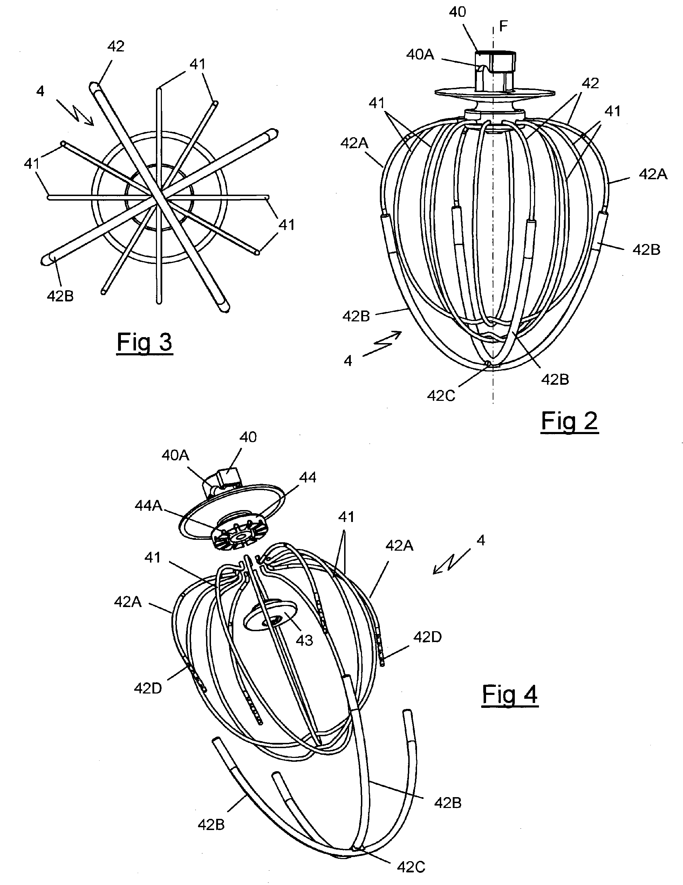

Conformément aux figures 2 à 4, le fouet 4 comporte une tête d'entraînement 40 destinée à être accouplée à l'entraîneur 32, la tête d'entraînement 40 comportant une encoche 40A prévue pour recevoir un axe transversal 32A porté par l'entraîneur 32 afin d'effectuer une liaison de type baïonnette.

La tête d'entraînement 40 supporte des fils 41 en forme de boucle, préférentiellement réalisés en matériau métallique, dont les extrémités sont attachées à la tête d'entraînement et qui définissent une cage centrale 41, sensiblement rigide, destinée à être plongée dans la cuve 2, la cage centrale 41 s'étendant sur une hauteur de l'ordre de 12 cm sous la tête d'entraînement 40 et présentant un diamètre de l'ordre de 11 cm.

Plus particulièrement selon l'invention, la tête d'entraînement 40 supporte également des brins 42 qui définissent une cage externe 42 déformable présentant une extrémité inférieure qui, dans l'axe longitudinal (F) du fouet 4, est située devant l'extrémité inférieure de la cage centrale 41 de telle sorte que l'extrémité inférieure de la cage externe 42 parvienne la première au contact de la cuve 2 lorsque le fouet est abaissé dans la cuve 2.

A titre d'exemple, la cage centrale 41 comporte quatre fils, de deux millimètres de diamètre, réalisés en acier inoxydable et la cage externe 42 comporte deux brins en forme de boucle, disposés perpendiculairement l'un par rapport à l'autre, les quatre fils de la cage centrale 41 étant régulièrement répartis entre les deux brins de la cage externe 42 de sorte que le fouet comporte un fil ou un brin tous les 30°.

Les fils de la cage centrale 41 et les brins de la cage externe 42 sont avantageusement fixés sur la tête d'entraînement 40 au moyen d'une coupelle 43 de fixation vissée sur la tête d'entraînement 40, la coupelle 43 venant emprisonner une extrémité recourbée des fils de la cage centrale 41 et des brins de la cage externe 42 dans des rainures 44A ménagées sur une bride de fixation 44 de la tête d'entraînement 40.

De manière préférentielle, les brins de la cage externe 42 sont plus longs que les fils de la cage centrale 41 et présentent une forme adaptée pour que la cage centrale 41 soit contenue dans l'enveloppe parcourue par les brins de la cage externe 42 lors de la rotation du fouet 4 autour de son axe longitudinal (F).

Les brins de la cage externe 42 comportent préférentiellement deux parties réalisées dans des matériaux différents, chaque brin comportant une partie supérieure 42A, réalisée dans un matériau rigide, et une partie inférieure 42B souple, avantageusement réalisée en matériau plastique, destinée à venir au contact de la paroi de la cuve 2.

Dans l'exemple de réalisation illustré, la partie supérieure 42A de chaque brin de la cage externe 42 est réalisée en fil d'inox de deux millimètres de diamètre et la partie inférieure 42B souple est constituée de fils de quatre millimètres de diamètre en matériau polymère, la cage externe 42 s'étendant sur une hauteur de l'ordre de 13 cm sous la tête d'entraînement 40. La partie supérieure 42A en fil d'inox s'étend sur la moitié de la hauteur de la cage externe 42 et les deux brins perpendiculaires de la cage externe 42 sont reliés entre eux par un pontet de liaison 42C obtenu directement de moulage avec la partie inférieure 42B, une telle construction permettant d'obtenir une bonne tenue géométrique de la cage externe.

La partie inférieure 42B est préférentiellement fixée par emmanchement sur l'extrémité inférieure des fils d'inox constituant la partie supérieure 42A, ces derniers comprenant avantageusement des encoches 42D favorisant l'accrochage et le maintien de la partie inférieure 42B sur la partie supérieure 42A.

Un tel assemblage présente l'avantage d'être très simple à réaliser et permet l'obtention d'une partie inférieure 42B amovible qui peut aisément être remplacée par l'utilisateur. Ainsi, l'utilisateur peut facilement remplacer la partie inférieure 42B de la cage externe 42 lorsque cette dernière est abîmée ou utiliser une partie inférieure 42B présentant une forme ou un matériau différent, par exemple spécifiquement adapté(e) à la réalisation d'une préparation particulière.

La figure 5 illustre l'utilisation du fouet 4 sur l'appareil de préparation culinaire de la figure 1. Conformément à cette figure, lorsque le bras 3 est abaissé en position de travail, la partie inférieure 42B souple de la cage externe 42 vient frotter contre la paroi de la cuve 2 en générant une déformation locale de la partie inférieure 42B, l'extrémité inférieure de la cage externe 42 étant relevée de l'ordre de 5 mm par rapport à sa forme initiale.

Lors de cette déformation de la partie inférieure 42B souple, la partie supérieure 42A rigide de la cage externe 42 conserve sensiblement sa forme initiale, ce qui permet de conserver une géométrie de la partie inférieure 42B souple relativement proche de sa forme initiale, la tenue géométrique de la cage externe 42 étant également renforcée par la liaison existant entre les deux brins au niveau du pontet 42C.

Dans cette position de travail, seule la cage externe 42 est en contact avec les parois de la cuve 2, la cage centrale 41 restant distante de plusieurs millimètres des parois de la cuve 2. Lors du fonctionnement de l'appareil, le fouet 4 est entraîné selon un mouvement planétaire et la partie inférieure 42B souple vient frotter sur la paroi de la cuve 2 ce qui permet d'aller au contact de la cuve 2 sans pour autant l'endommager et ainsi d'attraper, d'étirer puis de replier de manière optimale les protéines contenues dans les aliments présents au fond de la cuve 2, même lorsque ceux-ci sont présents en faible quantité. La cage centrale 41 à fils rigides assure quant à elle un excellent foisonnement des préparations plus visqueuses, notamment lorsque ces dernières sont présentes en grande quantité dans la cuve 2.

Un tel fouet 4 présente donc l'avantage d'une grande efficacité dans toutes les situations, et en particulier avec différents types d'aliments, fragiles et visqueux, granuleux, etc.

En particulier, le fouet 4 pourra être proposé avec différents types de partie inférieure 42B souple adaptables sur la partie supérieure rigide, les différentes parties inférieures 42B souples pouvant présenter différentes raideurs et différentes géométries de brin (cylindrique, rectangulaire, torsadée...) en fonction de la viscosité des aliments à traiter. De manière avantageuse, les différentes parties inférieures 42B souples pourront présenter des couleurs différentes afin de permettre à l'utilisateur d'identifier facilement quelle partie inférieure 42B est la plus adaptée au traitement d'un aliment.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans des variantes de réalisation non représentées, le nombre de fils de la cage centrale et le nombre de brins de la cage externe pourront être modifiés.

Ainsi dans une autre variante de réalisation non représentée, la partie inférieure souple pourra être réalisée en silicone, en nylon, en bambou ou bien encore en un alliage de nickel et titane à mémoire de forme.

## Revendications

1. Appareil électroménager de préparation culinaire, du genre robot ménager ou batteur, comportant un moteur (30) entraînant en rotation, par l'intermédiaire d'un organe de transmission, au moins un fouet (4) comportant une tête d'entraînement (40) et des fils (41) en forme de boucle dont les extrémités sont attachées à la tête d'entraînement (40), lesdits fils définissant une cage centrale (41) qui, en position de travail, est plongée dans un récipient de travail (2) sans venir au contact de ce dernier, **caractérisé en ce que** ledit fouet (4) comporte également des brins (42) définissant une cage externe (42) déformable présentant une moins grande rigidité que la cage centrale (41), ladite cage externe (42) comportant une partie inférieure (42B) souple qui déborde longitudinalement par rapport à l'extrémité inférieure de la cage centrale (41) et qui vient au contact d'une paroi du récipient de travail (2).

2. Appareil électroménager de préparation culinaire selon la revendication 1, **caractérisé en ce que** les brins de ladite cage externe (42) présentent une plus grande longueur que les fils de la cage centrale (41).

3. Appareil électroménager de préparation culinaire selon l'une quelconque des revendications 1 à 2, **caractérisé en ce que** les brins (42) sont en forme de boucle et leurs extrémités sont attachées à la tête d'entraînement (40).

4. Appareil électroménager de préparation culinaire selon la revendication 3, **caractérisé en ce que** lesdites cages centrale (41) et externe (42) sont symétriques par rapport à un axe (F) longitudinal du fouet (4) et **en ce que** la cage centrale (41) est contenue dans l'enveloppe parcourue par les brins de la cage externe (42) lors de la rotation du fouet (4) autour de son axe (F) longitudinal.

5. Appareil électroménager de préparation culinaire selon l'une quelconque des revendications 1 à 4, **caractérisé en ce que** lesdits brins de la cage externe (42) comprennent une partie supérieure (42A) présentant une plus grande rigidité que la partie inférieure (42B) souple.

6. Appareil électroménager de préparation culinaire selon la revendication 5, **caractérisé en ce que** la partie supérieure (42A) des brins de la cage externe (42) est réalisée en matériau métallique, par exemple en fil d'inox.

7. Appareil électroménager de préparation culinaire selon l'une quelconque des revendications 5 à 6, **caractérisé en ce que** ladite partie inférieure (42B) souple est montée de manière amovible sur la partie supérieure (42A) de la cage externe (42).

8. Appareil électroménager de préparation culinaire selon la revendication 7, **caractérisé en ce que** la partie supérieure (42A) de la cage externe (42) comporte une extrémité qui est emmanchée dans la partie inférieure (42B) souple.

9. Appareil électroménager de préparation culinaire selon la revendication 8, **caractérisé en ce que** la partie supérieure (42A) de la cage externe (42) venant s'emmancher dans la partie inférieure (42B) souple est munie d'encoches (42D) de retenue.

10. Appareil électroménager de préparation culinaire selon l'une quelconque des revendications 1 à 9, **caractérisé en ce que** les brins de la cage externe (42) sont reliés entre eux par un élément de liaison (42C) disposé au niveau de l'extrémité inférieure de la cage externe (42).

11. Appareil électroménager de préparation culinaire selon l'une quelconque des revendications 1 à 10, **caractérisé en ce que** la partie inférieure (42B) souple est réalisée, au moins partiellement, dans un matériau plastique, tel qu'un matériau polymère de type polyamide, polypropylène ou un élastomère.

12. Appareil électroménager de préparation culinaire selon l'une quelconque des revendications 1 à 11, **caractérisé en ce que** les fils de la cage centrale (41) sont métalliques.

13. Appareil électroménager de préparation culinaire selon la revendication 12, **caractérisé en ce que** lesdits fils de la cage centrale (41) sont en acier inoxydable.

## Patentansprüche

1. Elektrohaushaltsgerät zur Zubereitung von Speisen des Typs Küchenmaschine oder Handmixer mit einem Motor (30), der mittels eines Übertragungselements mindestens einen Schneebesen (4) in Drehung versetzt, der einen Antriebskopf (40) und Drähte (41) in Form von Schleifen, deren Enden am Antriebskopf (40) befestigt sind, umfasst, wobei die besagten Drähte einen Mittelkorb (41) beschreiben, der in Arbeitsposition in einen Arbeitsbehälter (2) getaucht ist, ohne mit diesem in Berührung zu kommen, **dadurch gekennzeichnet, dass** der besagte Schneebesen (4) auch Drahtschlaufen (42) umfasst, die einen verformbaren äußeren Korb (42) beschreiben, der eine geringere Festigkeit aufweist als der Mittelkorb (41), wobei der besagte äußere Korb (42) einen biegbaren unteren Teil (42B) umfasst, der längs über das untere Ende des Mittelkorbs (41) hinausragt und mit einer Wand des Arbeitsbehälters (2) in Berührung kommt.

2. Elektrohaushaltsgerät zur Zubereitung von Speisen nach Anspruch 1, **dadurch gekennzeichnet, dass** die Drahtschlaufen des besagten äußeren Korbs (42) eine größere Länge aufweisen als die Drähte des Mittelkorbs (41).

3. Elektrohaushaltsgerät zur Zubereitung von Speisen nach einem der Ansprüche 1 bis 2, **dadurch gekennzeichnet, dass** die Drahtschlaufen (42) wie Schleifen geformt sind und dass ihre Enden am Antriebskopf (40) befestigt sind.

4. Elektrohaushaltsgerät zur Zubereitung von Speisen nach Anspruch 3, **dadurch gekennzeichnet, dass** der besagte Mittelkorb (41) und äußere Korb (42) jeweils symmetrisch in Bezug auf eine Längsachse (F) des Schneebesens (4) sind, und dadurch, dass der Mittelkorb (41) in der Umhüllung enthalten ist, die durch die Drahtschlaufen des äußeren Korbs (42) bei der Drehung des Schneebesens (4) um seine Längsachse (F) durchlaufen wird.

5. Elektrohaushaltsgerät zur Zubereitung von Speisen nach einem der Ansprüche 1 bis 4, **dadurch gekennzeichnet, dass** die besagten Drahtschlaufen des äußeren Korbs (42) einen oberen Teil (42A) umfassen, der eine größere Festigkeit aufweist als der biegbare untere Teil (42B).

6. Elektrohaushaltsgerät zur Zubereitung von Speisen nach Anspruch 5, **dadurch gekennzeichnet, dass** der obere Teil (42A) der Drahtschlaufen des äußeren Korbs (42) in einem metallischen Material ausgeführt ist, zum Beispiel einem rostfreiem Draht.

7. Elektrohaushaltsgerät zur Zubereitung von Speisen nach einem der Ansprüche 5 bis 6, **dadurch gekennzeichnet, dass** der besagte biegbare untere Teil (42B) abnehmbar am oberen Teil (42A) des äußeren Korbs (42) angebracht ist.

8. Elektrohaushaltsgerät zur Zubereitung von Speisen nach Anspruch 7, **dadurch gekennzeichnet, dass** der obere Teil (42A) des äußeren Korbs (42) ein Ende umfasst, das in den biegbaren unteren Teil (42B) eingesteckt ist.

9. Elektrohaushaltsgerät zur Zubereitung von Speisen nach Anspruch 8, **dadurch gekennzeichnet, dass** der obere Teil (42A) des äußeren Korbs (42), der sich in den biegbaren unteren Teil (42B) einstecken lässt, mit Rastkerben (42D) versehen ist.

10. Elektrohaushaltsgerät zur Zubereitung von Speisen nach einem der Ansprüche 1 bis 9, **dadurch gekennzeichnet, dass** die Drahtschlaufen des äußeren Korbs (42) durch ein Verbindungselement (42C) miteinander verbunden sind, das am unteren Ende des äußeren Korbs (42) angebracht ist.

11. Elektrohaushaltsgerät zur Zubereitung von Speisen nach einem der Ansprüche 1 bis 10, **dadurch gekennzeichnet, dass** der biegbare untere Teil (42B) mindestens teilweise aus einem Kunststoff besteht, wie einem Polymer des Typs Polyamid, Polypropylen oder Elastomer.

12. Elektrohaushaltsgerät zur Zubereitung von Speisen nach einem der Ansprüche 1 bis 11, **dadurch gekennzeichnet, dass** die Drähte des Mittelkorbs (41) aus Metall bestehen.

13. Elektrohaushaltsgerät zur Zubereitung von Speisen nach Anspruch 12, **dadurch gekennzeichnet, dass** die besagten Drähte des Mittelkorbs (41) aus rostfreiem Stahl bestehen.

## Claims

1. Food preparation household electrical appliance, of food processor or mixer type, having a motor (30) driving in rotation, via a transmission member, at least one whip (4) having a drive head (40) and wires (41) forming a loop whose ends are attached to the drive head (40), said wires defining a central cage (41) which, in working position, is immersed in a working receptacle (2) without coming into contact with it, **characterised in that** said whip (4) also comprises strands (42) defining a deformable outer cage (42) having less rigidity than the central cage (41), said outer cage (42) having a flexible lower portion (42B) which projects longitudinally relative to the lower end of the central cage (41) and which touches a wall of the working receptacle (2).

2. Food preparation household electrical appliance according to claim 1, **characterised in that** the strands of said outer cage (42) are longer than the wires of the central cage (41).

3. Food preparation household electrical appliance according to claim 1 or 2, **characterised in that** the strands (42) form a loop and their ends are attached to the drive head (40).

4. Food preparation household electrical appliance according to claim 3, **characterised in that** said central (41) and outer (42) cages are symmetrical about a longitudinal axis (F) of the whip (4) and **in that** the central cage (41) is contained in the envelope crossed by the strands of the outer cage (42) during rotation of the whip (4) about its longitudinal axis (F).

5. Food preparation household electrical appliance according to any of claims 1 to 4, **characterised in that** said strands of the outer cage (42) comprise an upper portion (42A) having greater rigidity than the lower flexible portion (42B).

6. Food preparation household electrical appliance according to claim 5, **characterised in that** the upper portion (42A) of the strands of the outer cage (42) is made from a metallic material, for example stainless steel wire.

7. Food preparation household electrical appliance according to claim 5 or 6, **characterised in that** said lower flexible portion (42B) is removably mounted on the upper portion (42A) of the outer cage (42).

8. Food preparation household electrical appliance according to claim 7, **characterised in that** the upper portion (42A) of the outer cage (42) has an end which is inserted in the lower flexible portion (42B).

9. Food preparation household electrical appliance according to claim 8, **characterised in that** the upper portion (42A) of the outer cage (42) which inserts in the lower flexible portion (42B) is provided with retaining notches (42D).

10. Food preparation household electrical appliance according to any of claims 1 to 9, **characterised in that** the strands of the outer cage (42) are connected together by a connecting element (42C) arranged at the lower end of the outer cage (42).

11. Food preparation household electrical appliance according to any of claims 1 to 10, **characterised in that** the lower flexible portion (42B) is made, at least partially, from a plastic material such as a polymer material of type polyamide, polypropylene or an elastomer.

12. Food preparation household electrical appliance according to any of claims 1 to 11, **characterised in that** the wires of the central cage (41) are metallic.

13. Food preparation household electrical appliance according to claim 12, **characterised in that** said wires of the central cage (41) are made from stainless steel.
